# EUROPÄISCHE PATENTSCHRIFT

(11) **EP 2 210 689 B1**
(45) Veröffentlichungstag und Bekanntmachung des Hinweises auf die Patenterteilung: **09.05.2012**
(21) Anmeldenummer: 10004295.1
(22) Anmeldetag: 09.05.2008
(51) Int. Cl.: B22D 27/04, C30B 29/52, C30B 11/00, C30B 29/60, F01D 5/14, F01D 5/18, F01D 5/28, C22F 1/10, C22C 19/05

(54) **Gerichtet erstarrtes längliches Bauteil mit verschieden breiten Längskörnern**
Directionally solidified elongated component with elongated grains of differing widths
Composant oblong obtenu par solidification directionelle ayant différentes tailles transversales de grains longitudinaux

(43) Veröffentlichungstag der Anmeldung: 28.07.2010
(62) Teilanmeldung aus: 08008783.6
(73) Patentinhaber: SIEMENS AKTIENGESELLSCHAFT, 80333 München (DE)
(72) Erfinder: Ahmad, Fathi, 41564 Kaarst (DE); Krause, Stefan, 47803 Krefeld (DE); Lüsebrink, Oliver, Dr., 58456 Witten (DE)

(56) Entgegenhaltungen:
- EP-A- 0 066 971
- EP-A- 0 413 439
- WO-A-99/67435
- CA-A- 838 482
- GB-A- 2 030 233

## Beschreibung

Die Erfindung betrifft ein längliches Bauteil gemäß Anspruch 1.

Viele Bauteile zum Einsatz im Hochtemperaturbereich weisen eine einkristalline (SX) oder eine kolumnar (DS) erstarrte Struktur auf.

Dies führt zur weiteren Steigerung der mechanischen Festigkeit gegenüber einem ungerichtet erstarrten Bauteil (CC).

Kolumnar erstarrte Bauteile sind kostengünstiger herzustellen als einkristalline Bauteile.

Jedoch weisen diese gerichtet erstarrten Bauteil gegenüber einkristallinen Bauteilen Nachteile in der mechanischen Festigkeit auf.

Die EP 0 413 439 A1 offenbart eine Superlegierung zur Herstellung eines Bauteils mit kolumnar erstarrten Körnern.

Die GB 2 030 233 A offenbart die Herstellung von drei einkristalliren Komponenten, die zu einer Turbinenschaufel zusammengefügt werden.

Die EP 0 066 971 A2 offenbart die Herstellung eines Bauteils mit länglichen Körnern, die alle gleich groß sind.

Es ist daher Aufgabe oben genanntes Problem zu überwinden.

Die Aufgabe wird gelöst durch ein Bauteil gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1 bis 6: verschieden Sichten eines Bauteils,
- Figur 7: ein Verfahren, um ein Bauteil herzustel- len,
- Figur 8: eine Gasturbine,
- Figur 9: perspektivisch eine Turbinenschaufel,
- Figur 10: perspektivisch eine Brennkammer und
- Figur 11: eine Liste von DS-Superlegierungen.

Die Figuren und die Beschreibung stellen nur Ausführungsbeispiele der Erfindung dar.

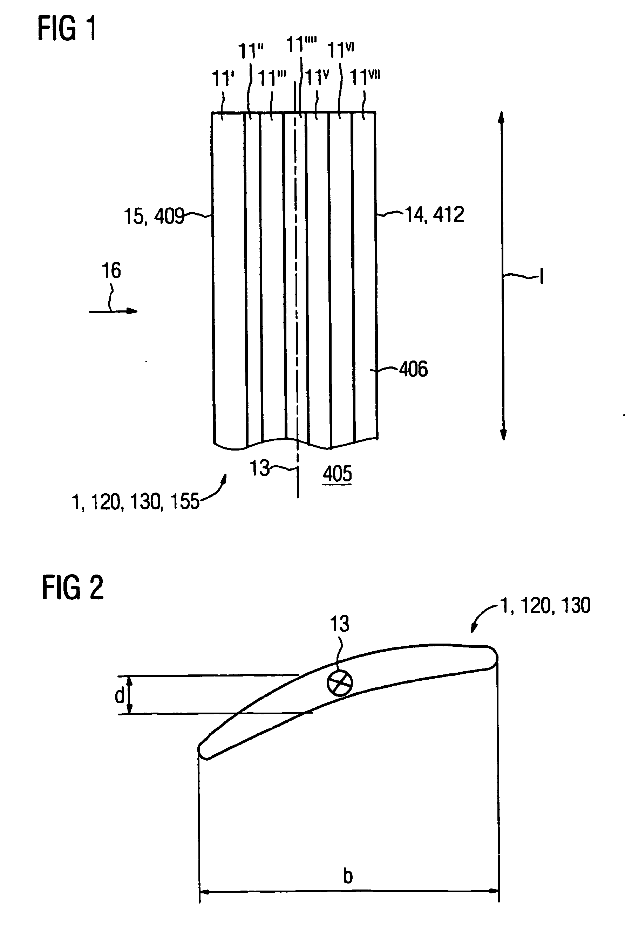

Figur 1 zeigt beispielhaft ein längliches Bauteil 1, 120, 130, 155.

Das längliche Bauteil 1, 120, 130, 155 weist eine Längsachse 13, 1 auf, entlang derer es sich erstreckt.

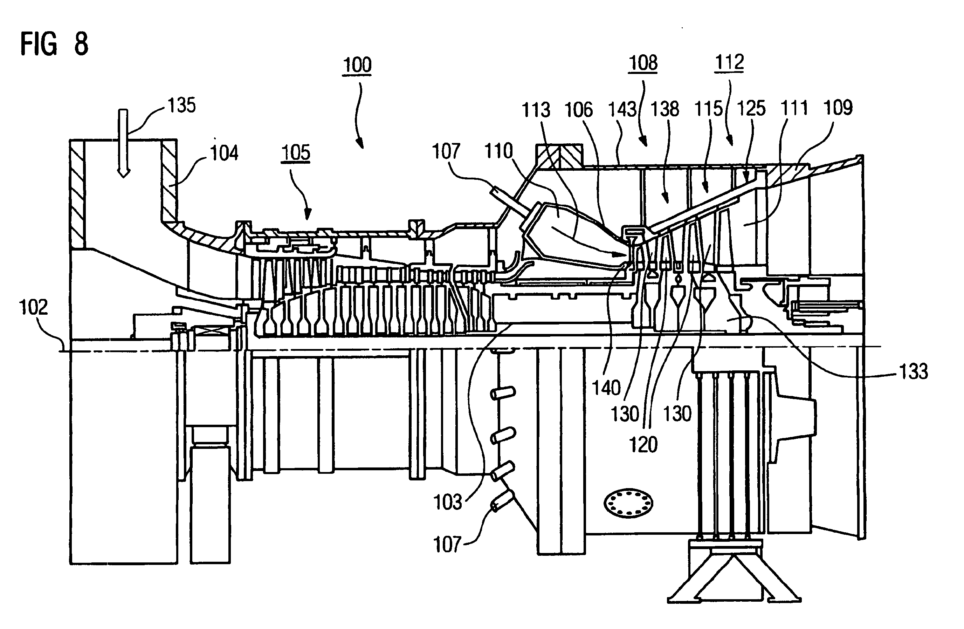

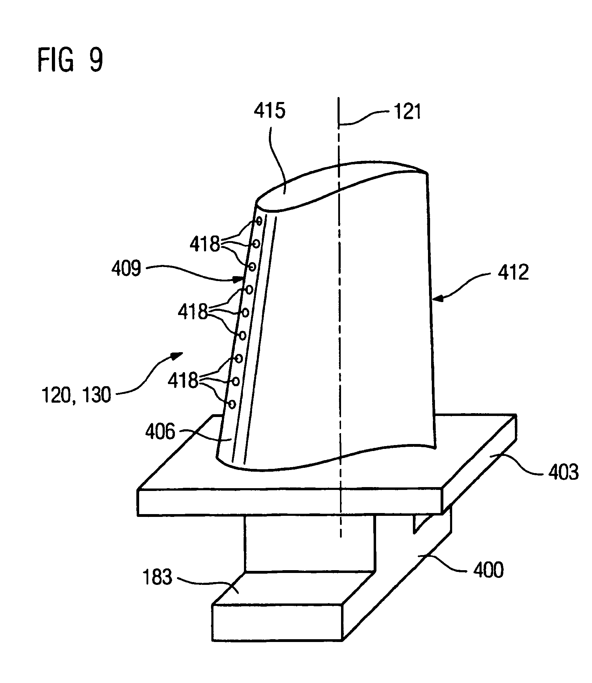

Die Breite b des Bauteils 1, 120, 130, 155 ist eine Ausdehnung senkrecht zur Längsachse 13 (Fig. 2). Die Breite b kann auch die Sehnenlänge einer Turbinenschaufel 120, 130 (Fig. 8, 9) sein.

Vorzugsweise ist das längliche Bauteil 1 eine Turbinenschaufel 120, 130, das von einem Medium in der Umströmungsrichtung 16, die senkrecht zur Längsachse 13 verläuft, umströmt wird. Die Erfindung wird nur beispielhaft anhand einer Turbinenschaufel 120, 130 erläutert.

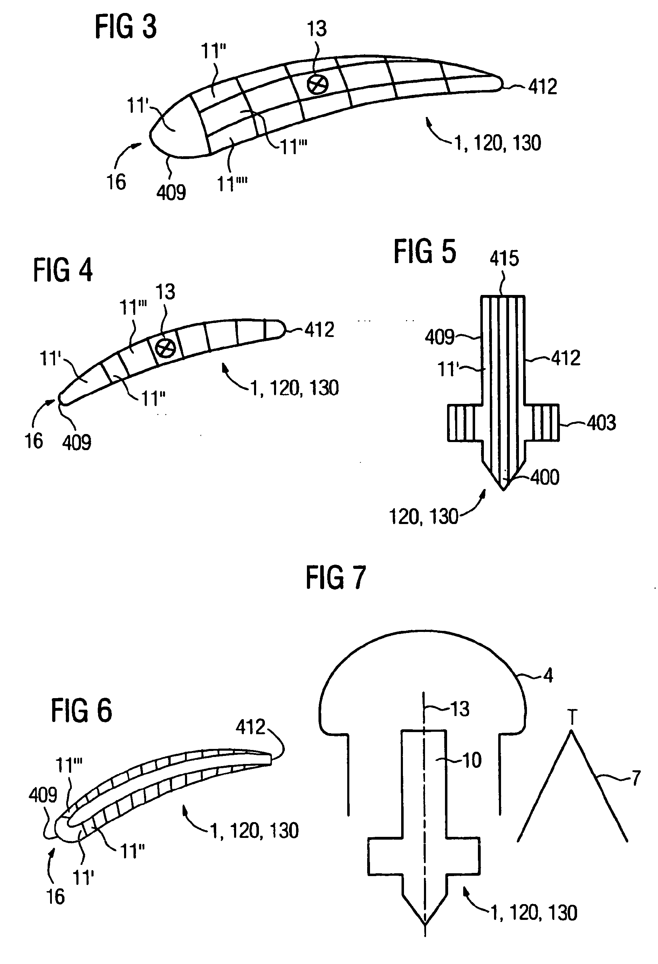

Die Breite b der Turbinenschaufel 120, 130 ist hier die Ausdehnung in Strömungsrichtung 16 eines Mediums, das die Turbinenschaufel 1, 120, 130 umströmt (Fig. 3).

Die Dicke d der Turbinenschaufel 120, 130 verläuft senkrecht zur Strömungsrichtung 16 bzw. senkrecht zu der Breite b und der Länge 1.

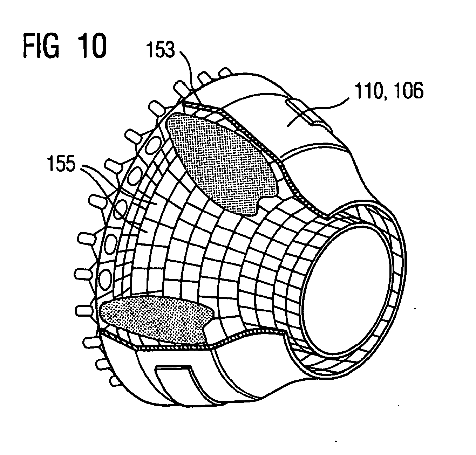

Mit der Länge 1 ist die Länge von Längskörnern 11', 11" gemeint, nicht unbedingt die Länge des Bauteils 1, 120, 130, 155 (Fig. 8, 9, 10). Vorzugsweise ist die Länge 1 die Länge des länglichen Bauteils 1, 120, 130, 155.

Länglich bedeutet ein Längen/Breitenverhältnis 1/b > 3 oder Längen/Dickenverhältnisse 1/d von mindestens 5, insbesondere von 10.

Das längliche Bauteil 1, 120, 130, 155 weist längs der Längsachse 13 Längskörner 11', 11",... auf und besteht zu 90% aus Längskörnern 11', 11", ..., insbesondere zu 100%.

Ein Längskorn 11', 11", ... ist quasi ein Einkristall.

Das längliche Bauteil 1, 120, 130, 155 ist durch ein Gussverfahren hergestellt, so dass die Längskörner 11', 11" , ... durch Korngrenzen miteinander verbunden sind.

Das längliche Bauteil 1 weist eine Vorderkante 15, 409 und eine Hinterkante 14, 412 auf.

Im Fall der Turbinenschaufel 120, 130 weist zumindest ein Turbinenblatt 406 (Fig. 8) die kolumnaren Körner 11', 11", 11"', ... auf.

Vorzugsweise besteht das Schaufelblatt 406 nur aus kolumnar erstarrten Körnern 11', 11", 11"', .... Die oben genannten Längen/Breitenverhältnisse bzw. Längen/Dickenverhältnisse beziehen sich dann hier vorzugsweise nur auf das Turbinenblatt 406.

Die Turbinenschaufel 120, 130 weist mehrere kolumnar erstarrte Längskörner 11', 11", ... auf, die sich längs der Längsachse 13 erstrecken.

Das längliche Bauteil 1, 120, 130, 155 weist mindestens drei, insbesondere sechs oder ganz insbesondere zwölf Längskörner 11', 11", ... auf.

Vorzugsweise sind es maximal 60 Längskörner 11', 11'', 11''', ..., ganz insbesondere maximal 50 Längskörner 11' , 11" , ....

Die Längskörner 11', 11" , ..., weisen quer zur Längsachse 13 verschiedene Kornbreiten auf. Einige Längskörner 11', 11", 11"', 11"" können gleich breit sein.

Vorzugsweise weist das erste Längskorn 11' an einer Kante 15, 409, das von einem Medium angeströmt wird, die größte Kornbreite a' oder den größten Kornquerschnitt auf. Die nachfolgenden Körner 11'', 11"' , ..., weisen keine größere Breite a', a", ... auf, können jedoch höchstens teilweise auch genau so breit sein.

Dabei sind vorzugsweise höchstens die Hälfte der Längskörner 11'', 11''', ... genauso breit wie das erste Längskorn 11'. Vorzugsweise sind die restlichen Längskörner 11'', 11"' kleiner in der Kornbreite.

Mit "Kante" kann auch eine Vorderseite eines länglichen Bauteils 1 oder einer Turbinenschaufel 120, 130 gemeint sein. Mit dem Begriff "Kornbreite" kann auch die Querschnittsfläche eines Längskorns 11', 11 " gemeint sein. Maximale Kornbreite bedeutet dann entsprechend maximale Querschnittsfläche des Korns.

Vorzugsweise weist das erste Längskorn 11' eine Kornbreite a' von 5mm bis 60mm auf.

Die anderen Längskörner 11 " , 11''', ... können breiter ausgebildet sein als das erste Längskorn 11'.

Somit liegen im Bereich der höchsten mechanischen Belastung des Bauteils keine Korngrenzen vor.

Die Turbinenschaufel 120, 130 weist dabei eine Breite b (längs einer Strömungsrichtung) von 70mm bis 300mm auf.

Die Turbinenschaufel 120, 130 weist dabei vorzugsweise eine Länge von 100mm (1. Stufe) bis 500mm (3. Stufe) auf.

Erfindungsgemäß beträgt die Kornbreite a' des ersten Längskorns 11' an einer Kante 15, 409 des Bauteils 1, 120, 130, 155 mindestens 20% der Breite b des Bauteils 1, 120, 130, 155. Andere Längskörner 11", 11"', ... können genauso breit oder breiter sein.

Als Spezialfall wird das erste Korn 11' eines Bauteils 1, 120, 130 breiter ausgeführt als die anderen, bei dem das Breiten/Dickenverhältnis b/d (aspect ratio) größer 2, insbesondere größer 5 ist.

Vorzugsweise weist das gesamte Schaufelblatt 406 Längskörner 11', 11'', ..., auf. Weiterhin vorzugsweise erstrecken sich die Längskörner 11', 11'', ... zumindest bis in die Schaufelplattform 403 hinein, insbesondere über die Schaufelplattform 403 oder darüber hinaus (Fig. 5).

Insbesondere bei dem Übergang zwischen Schaufelblatt 406 und Schaufelplattform 403 ist ein breites Korn 11' vorhanden.

Die Anzahl der Längskörner 11', 1", ... ist vorzugsweise an der Schaufelspitze 415 am größten und kann sich zum Befestigungsbereich 400 verringern (nicht dargestellt), da einzelne Längskörner 11', 11'', ... auf Kosten anderer wachsen.

Der Schaufelfuß 400 kann auch anders orientierte Körner aufweisen. Die Länge 1 ist dann hier die Länge des Schaufelblatts 406. Zu der Länge der Turbinenschaufel 120, 130 kommt dann noch die Ausdehnung des Befestigungsbereichs 400 in Längsrichtung 13 hinzu.

Vorzugsweise weist der Befestigungsbereich 400 auch nur längliche Körner 11', 11'', ... auf, also 1 = gesamte Länge der Turbinenschaufel 120, 130.

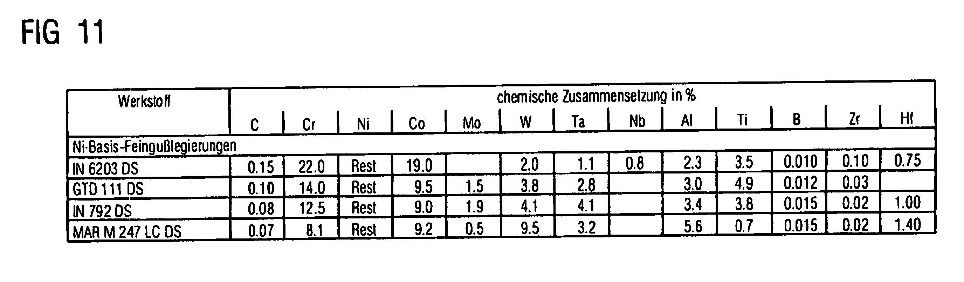

Die Turbinenschaufel 120, 130 weist vorzugsweise eine DS-Superlegierung gemäß Figur 11 auf,
aber auch CM 247 LC DS
sowie vorzugsweise eine Legierung umfassend (in Gew%)
11.94% Cr
4.03% Ti
1.84% Mo
3.75% W
5.15% Ta
3.55% Al
8.93% Co
0.008% B
0.02% Zr
0.06% C
0.01% Hf
Rest Nickel
mit Tantalkarbid (0.4 vol% to 1.5 vol%) als Sekundärphase
oder vorzugsweise aufweisend:

| | | | |
|---|---|---|---|
| Cr | 11.60 | bis | 12.70 % |
| Ti | 3.90 | bis | 4.25 % |
| Mo | 1.65 | bis | 2.15 % |
| W | 3.50 | bis | 4.10 % |
| Ta | 4.80 | bis | 5.20 % |
| Al | 3.40 | bis | 3.80 % |
| Co | 8.50 | bis | 9.50 % |
| B | 0.0125 | bis | 0.0175 % |
| C | 0.08 | bis | 0.10 % |
| Ni | | Rest. | |

In Figur 3 sind die Längskörner 11', 11'', ... wie in Figur 2 im Querschnitt gezeigt.

Die Längskörner 11', 11", ... können in Strömungsrichtung 16 nebeneinander und hintereinander vorhanden sein.

In Figur 4 sind die Längskörner 11', 11", ... hintereinander in Strömungsrichtung 16 vorhanden.

Entsprechendes gilt jeweils für eine Wand einer Turbinenschaufel 120, 130 oder eines Hohlbauteils (Fig. 6).

Vorzugsweise wird die Kante 15, 409, also quasi die Vorderseite des Bauteils 120, 130, nur von diesem Längskorn 11' gebildet.

In Figur 7 ist beispielhaft dargestellt, wie eine solche Turbinenschaufel 120, 130 hergestellt wird.

Bekannt aus dem Stand der Technik ist durch Heizer 4 ein Temperaturgradient längst der Längsachse 13 einzurichten, wobei die Turbinenschaufel beispielhaft von Schaufelspitze zum Schaufelfuß 400 verläuft, so dass die tiefste Temperatur an der Schaufelspitze 415 ausgeprägt ist und das Bauteil 1 durch einen Temperaturgradienten 7 gezogen wird.

## Patentansprüche

1. Längliches Bauteil (1, 120, 130, 155) hergestellt durch ein Gussverfahren aus einem metallischen werkstoff,
das eine Längsachse (1, 13) aufweist,
das längs der Längsachse (1, 13) mehrere stängelkristallin gerichtet erstarrte Längskörner (11', 11", ...) aufweist, wobei die Längskörner (11', 11", ...) quer zur Längsachse (13) Kornbreiten aufweisen,
wobei das Bauteil (1, 120, 130, 155) eine Breite (b) aufweist,
**dadurch gekennzeichnet, dass**
die Kornbreite des Längskorns (11') an einer Kante (15, 409) des Bauteils (1, 120, 130, 155) mindestens 20% der Breite (b) des Bauteils (1, 120, 130, 155) beträgt,
bei dem das Bauteil (1, 120, 130, 155) senkrecht zur Längsachse (13) eine Breite (b) von 70mm bis 300mm aufweist, insbesondere von 100mm bis 250mm, und
das (1, 120, 130, 155) mindestens drei,
insbesondere mindestens sechs,
ganz insbesondere mindestens zwölf,
Längskörner (11', 11'', ...) aufweist,
das ein Gussteil ist und mindestens zu 90% aus Längskörnern (11', 11'', ...) besteht.

2. Längliches Bauteil nach Anspruch 1,
bei dem das Längskorn (11') an der Kante (15, 409) senkrecht zur Längsachse (13) eine Kornbreite von 5mm bis 60mm,
ganz insbesondere 10mm bis 60mm,
ganz insbesondere 5mm bis 40mm,
aufweist.

3. Längliches Bauteil nach Anspruch 1 oder 2,
das eine Länge (1) und eine Breite (b) aufweist und
das ein Längen/Breitenverhältnis (1/b) von > 3 aufweist.

4. Längliches Bauteil nach Anspruch 1 oder 2,
das eine Länge (1) und eine Dicke (d) aufweist,
das eine Längen/Dickenverhältnis (1/d) > 5,
insbesondere > 10,
aufweist.

5. Längliches Bauteil nach Anspruch 1,
das von einem Medium in einer Strömungsrichtung (16) unter einem von 0° verschiedenen Winkel,
insbesondere senkrecht zur Längsachse (1, 13) umströmt wird,
und wobei das breiteste oder das querschnittsgrößte Längskorn (11') das am ersten angeströmte Längskorn (11') darstellt.

6. Bauteil nach Anspruch 1, 3, 4 oder 5,
das eine Breite (b) und eine Dicke (d) aufweist,
das ein Breiten/Dickenverhältnis (b/d) von > 2, insbesondere > 5,
ganz insbesondere > 10,
aufweist.

7. Bauteil nach Anspruch 1 oder 6,
das maximal 60 Längskörner (11', 11'', ...),
insbesondere maximal 50 Längskörner (11', 11'', ...), aufweist.

8. Bauteil nach Anspruch 1, 6 oder 7,
bei dem das Längskorn (11') eine Mindestkornbreite von 5mm aufweist.

9. Bauteil nach Anspruch 1, 6, 7 oder 8,
bei dem die Kornbreite des Längskorns (11') an der Kante (15, 409) des Bauteils (1, 120, 130, 155) maximal 50% der Breite (b) des Bauteils (1, 120, 130, 155) beträgt.

10. Bauteil nach einem oder mehreren der Ansprüche 1 bis 10,
das als eine Turbinenschaufel (120, 130) ausgebildet ist.

## Claims

1. Elongate component (1, 120, 130, 155) produced from a metallic material by a casting process,
which has a longitudinal axis (1, 13),
and which has a plurality of longitudinal grains (11', 11'', ...) directionally solidified in a rod-crystalline form along the longitudinal axis (1, 13),
the longitudinal grains (11', 11'', ...) having grain widths transverse to the longitudinal axis (13),
the component(1, 120, 130, 155) having a width (b), **characterized in that**
the grain width of the longitudinal grain (11') on an edge (15, 409) of the component (1, 120, 130, 155) is at least 20% of the width (b) of the component (1, 120, 130, 155), wherein the component (1, 120, 130, 155) has a width (b) of from 70 mm to 300 mm, in particular from 100 mm to 250 mm, perpendicularly to the longitudinal axis (13), and which
the component (1, 120, 130, 155)
has at least three,
in particular at least six,
more particularly at least twelve
longitudinal grains (11', 11'', ...),
which is a cast part, more than 90% of which consists of longitudinal grains (11', 11'', ...).

2. Elongate component according to Claim 1,
wherein the longitudinal grain (11') on the edge (15, 409) has a grain width of from 5 mm to 60 mm,
more particularly from 10 mm to 60 mm,
more particularly from 5 mm to 40 mm,
perpendicularly to the longitudinal axis (13).

3. Elongate component according to Claim 1 or 2,
which has a length (1) and a width (b), and
which has a length/width ratio (l/b) of > 3.

4. Elongate component according to Claim 1 or 2,
which has a length (l) and a thickness (d), and
which has a length/thickness ratio (l/d) of > 5,
in particular > 10.

5. Elongate component according to Claim 1,
around which a medium flows in a flow direction (16) at an angle not equal to 0°,
in particular perpendicularly to the longitudinal axis (l, 13),
and wherein the longitudinal grain (11') which is widest or has the largest cross section represents the longitudinal grain (11') receiving the flow first.

6. Component according to Claim 1, 3, 4 or 5,
which has a width (b) and a thickness (d), and
which has a width/thickness ratio (b/d) of > 2,
in particular > 5,
more particularly > 10.

7. Component according to Claim 1 or 6,
which has at most 60 longitudinal grains (11', 11'', ...),
in particular at most 50 longitudinal grains (11', 11'', ...).

8. Component according to Claim 1, 6 or 7,
wherein the longitudinal grain (11') has a minimum grain width of 5 mm.

9. Component according to Claim 1, 6, 7, or 8,
wherein the grain width of the longitudinal grain (11') on the edge (15, 409) of the component (1, 120, 130, 155) is at most 50% of the width (b) of the component (1, 120, 130, 155).

10. Component according to one or more of Claims 1 to 9, which is designed as a turbine blade (120, 130).

## Revendications

1. Composant ( 1, 120, 130, 155 ) oblong, fabriqué en un matériau métallique par un procédé de coulée,
qui a un axe ( 1, 13 ) longitudinal,
qui a le long de l'axe ( 1, 13 ) longitudinal plusieurs grains ( 11', 11"... ) longitudinaux, cristallin en aiguille, solidifiés de manière dirigée, les grains ( 11', 11"... ) longitudinaux ayant des largeurs de grain transversalement à l'axe ( 13 ) longitudinal,
dans lequel le composant ( 1, 120, 130, 155 ) a une largeur ( b ),
**caractérisé en ce que**
la largeur du grain ( 11') longitudinal sur un bord ( 15, 409 ) du composant ( 1, 120, 130, 155 ) représente au moins 20% de la largeur (b) du composant ( 1, 120, 130, 155 ),
dans lequel le composant ( 1, 120, 130, 155 ) a perpendiculairement à l'axe ( 13 ) longitudinal une largeur ( b ) de 70 mm à 300 mm, notamment de 100 mm à 250 mm, et
le composant ( 1, 120, 130, 155 ) a au moins trois,
notamment au moins six,
tout à fait notamment au moins douze grains (11', 11"...) longitudinaux,
c'est une pièce coulée et elle est constituée pour au moins 90% de grains ( 11', 11"... ) longitudinaux.

2. Composant oblong suivant la revendication 1,
dans lequel le grain ( 11', 11"... ) longitudinal a sur le bord ( 15, 409 ) perpendiculairement à l'axe ( 13 ) longitudinal une largeur de grain de 5 mm à 60 mm,
tout à fait notamment de 10 mm à 60 mm,
tout à fait notamment de 5 mm à 40 mm.

3. Composant oblong suivant la revendication 1 ou 2,
qui a une longueur ( l ) et une largeur ( b ) et qui a un rapport ( l/b ) de la longueur à la largeur supérieure à 3.

4. Composant oblong suivant la revendication 1 ou 2,
qui a une longueur ( l ) et une épaisseur ( d ),
qui a un rapport ( l/d ) de la longueur à l'épaisseur supérieur à 5,
notamment supérieur à 10.

5. Composant oblong suivant la revendication 1,
devant lequel passe un fluide dans un sens ( 16 ) d'écoulement sous un angle différent de 0°, notamment perpendiculairement à l'axe ( 13 ) longitudinal,
et dans lequel le grain ( 11' ) longitudinal le plus large ou de section transversale la plus grande représente le grain ( 11' ) longitudinal sur lequel le courant arrive le premier.

6. Composant suivant la revendication 1, 3, 4 ou 5,
qui a une largeur ( b ) et une épaisseur ( d ),
qui a un rapport ( b/d ) de la largeur à l'épaisseur supérieur à 2,
notamment supérieur à 5,
tout à fait notamment supérieur à 10.

7. Composant suivant la revendication 1 ou 6,
qui a au maximum 60 grains ( 11', 11"... ) longitudinaux, notamment au maximum 50 grains ( 11', 11"... ) longitudinaux.

8. Composant suivant la revendication 1, 6 ou 7,
dans lequel le grain ( 11' ) longitudinal a une largeur minimum de grain de 5 mm.

9. Composant suivant la revendication 1, 6, 7 ou 8,
dans lequel la largeur du grain ( 11' ) longitudinal sur le bord ( 15, 409 ) du composant ( 1, 120, 130, 155 ) représente au maximum 50 % de la largeur ( b ) du composant ( 1, 120, 130, 155 ).

10. Composant suivant l'une ou plusieurs des revendications 1 à 9,
qui est constitué sous la forme d'une aube ( 120, 130 ) de turbine.
